(19) Europäisches Patentamt
European Patent Office
Office européen des brevets

(11) **EP 2 824 565 A1**

(12) **EUROPEAN PATENT APPLICATION**

(43) Date of publication:
**14.01.2015 Bulletin 2015/03**

(51) Int Cl.:
***G06F 7/58*** (2006.01)

(21) Application number: **13197315.8**

(22) Date of filing: **16.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.07.2013 JP 2013142225**
**02.10.2013 JP 2013206947**

(71) Applicants:
• **Nakazawa, Hiroshi**
**Hirakata-shi Osaka 573-0081 (JP)**
• **Nakazawa, Naoya**
**Hirakata-shi Osaka 573-0081 (JP)**

(72) Inventors:
• **Nakazawa, Hiroshi**
**Hirakata-shi Osaka 573-0081 (JP)**
• **Nakazawa, Naoya**
**Hirakata-shi Osaka 573-0081 (JP)**

(74) Representative: **Ström & Gulliksson AB**
**P.O. Box 4188**
**203 13 Malmö (SE)**

Remarks:
A request for correction has been filed pursuant to Rule 139 EPC. A decision on the request will be taken during the proceedings before the Examining Division (Guidelines for Examination in the EPO, A-V, 3.).

(54) **Method of generating uniform and independent random numbers**

(57) An invention is presented with new and simple ways of spectral tests applicable to the multiplicative congruential generator (d,z) with any odd modulus d and any multiplier z coprime to d. The invention realizes powerful ways to select multipliers of excellence with greatly improved statistical performances in their generation of uniform and independent random numbers. Related two inventions for new designs of the generator (d,z) are presented at the same time, as strongly facilitative for the application of advocated extended spectral tests, by exploiting specific structures of moduluses formed by two odd-prime-powers so as to realize improved periodic structures that are set conveniently out of tune avoiding harmful resonances.

EP 2 824 565 A1

**Description**

**Background of the Invention**

**Field of the Invention**

Kronecker said: God made natural numbers; all else is the work of man. As inventors guess, he would have meant that the whole mathematics stood on God's invention of natural numbers, or of the recurrence relation $x_{k+1}=x_k+1$ with $x_1=1$; and toils, inspirations and thoughts of excellent people thereafter enabled us to have rationals, reals, complex numbers, matrices, geometry, analysis, and the algebra. Inventors at present are in the extreme distance from the state of knowing the depth and beauties of mathematics of the day. Yet the perspective, that the whole system of mathematics is built on the simplest recursion relation, encourages us. We present here efforts to generate random numbers on computers. We in particular show that an arbitrary sequence of uniform and independent random numbers on computers may be regarded as generated by multiplicative congruential way, and put this fact to the basis of the technological method of random number generation. Hopefully, we shall not be defying Gods, and Gods may bless us with bright prospects that are realizable by works of men.

The Use of distilled water without impurities is indispensable to ascertain stable and accurate chemical transformations. Random numbers with various statistics are obtained on computers by highly accurate analytic transformations from uniform and independent ones. The generation of random numbers with highly accurate uniformity and independence is thus vital to any computer simulations that utilize various types of random numbers. Our aim is to present inventions for methods to generate random number sequences on computers with radically improved accuracy in their statistics. It should be noted that theories of probability or stochastic processes invariably depend on premises that sequences consist of infinite elements and that numbers treated have infinite precision of reals. These premises introduce many simplifications as well as unifications in forms of limit theorems or ergodic theorems. In contrast, computers can treat only finite length T for sequences, however large T may be. And their real numbers can only be discrete with the smallest unit of precision. Finiteness of sequences and discreteness of numbers usually evoke complications. Yet, our conscious recognition offiniteness and discreteness frees us from various metaphysical problems, such as the question of the possibility of generation itself of random numbers on computers. We thus proceed here assuming explicitly the finiteness of treated numbers and sequences. As will be elucidated shortly, this enables us to concentrate on the multiplicative and congruential generation of uniform and independent random numbers, which
comprises a positive integer d called modulus,
comprises a positive integer z coprime to d and called multiplier,
comprises a positive integer n coprime to d and called initial value or *seed,*
emits a sequence $\{r_k=n\,z^k|\ 0<r_k<d,\ k=0,1,2,\cdots\}$ of integers recursively by congruence relations

$$r_0\equiv n,\quad r_k\equiv z\,r_{k-1}\bmod(d),\quad 0<r_k<d,\quad k=1,2,3,\cdots,$$

and gives the sequence $\{v_1,v_2,v_3,...\}$ for random numbers in the interval (0,1) as

$$v_k=r_{k-1}/d,\quad k=1,2,3,\cdots.$$

Note the staggered definition of $v_k$ and $r_{k-1}$ adapted here for later conveniences. A multiplicative congruential generator for uniform and independent random numbers with the modulus d, the multiplier z and the initial value n will be noted symbolically as (d,z,n). If the initial value n is not relevant in arguments, the symbol will be abbreviated to (d,z). Information of random numbers is not compressed into three numbers (d,z,n); it is obtained as the entity of indications given by (d,z,n) *and* the vast amount of computational works to obtain the sequence. Forms of powers such as the $j_k$-th power of the $p_i$ will be noted as $(p_i)^{\wedge}j_k$ at places, to avoid confusion and for the notational convenience.

**Description of the Related Art**

We start with the general technological and mathematical characterization of the problem. Generators of random numbers on computers are required to be reproducible, i.e. they should give the identical sequence of random numbers on demands of users, e.g. when users need to debug their simulation programs. Generators should also be transportable, i.e. they should reproduce the identical sequence of random numbers on any computers and in any computing languages.

And simulations usually require too many random numbers to be stored in computer memory. Thus, random numbers on computers can only be generated successively by the integer arithmetic, which is free from truncation and round-off errors and gives the identical results on any computers or in any computing languages. Stated more explicitly, computers should produce a sequence $\{x_1,x_2,\cdots,x_T\}$ of integers bounded as $0 \leq x_k < z$ for all k with a sufficiently large integer z, and output the associated $u_k := x_k/z$ successively for $k=1,2,\cdots$ as uniform and independent random numbers by the real or rational arithmetic. The number of different states, in any computer available for the determination of the next integer output, is finite. Hence its initial state inevitably recurs, and the length of the random number sequence specified by T is restricted to be finite. Let $\{x_1,x_2,\cdots,x_T\}$ be an arbitrary *finite* sequence of integers within a bound $0 \leq x_k < z$. Excluding two cases that $\{x_1,x_2,\cdots,x_T\}$ are all zero and all d-1, we obtain a simple circumstance that this sequence corresponds to a period of the periodic sequence arising in the division process of an *irreducible* fraction n/d to the base z with x=n/d satisfying 0<x<1,

$$x = 0.x_1 x_2 \cdots x_T\ x_1 x_2 \cdots x_T \cdots = (x_1 z^{T-1} + x_2 z^{T-2} + \cdots + x_T)/(z^T - 1) = n/d, \qquad 0 < n < d.$$

Since the divisor d is a factor of $z^T - 1$, d and z are coprime. Division processes of n over d never end, and are expressed by equations:

$$r_0 = n, \quad zr_{k-1} = dx_k + r_k, \quad 1 \leq r_k < d, \quad 0 \leq x_k < z, \quad r_k \equiv zr_{k-1}\ \mathrm{mod}(d), \quad k=1,2,3,\cdots.$$

A significant point to be noted is that the alteration of one number in the sequence $\{x_1,x_2,\cdots,x_T\}$, say $x_j$ to $x_j'$, will change the form of the irreducible fraction n/d, and the intuitive nearness of integer sequences can generally result in a very different forms of irreducible fractions, though the division processes will be *almost* parallel. Another point is that the second equation divided by dz gives the key estimate,

$$0 < r_{k-1}/d - x_k/z = r_k/(dz) < 1/z, \qquad k=1,2,\cdots.$$

This estimate represents a trivial fact: If a remainder is small in the division of n by d, then the next quotient is small. However, the result is not trivial at all. In practice the integer z is larger than $2^{30}$, and 1/z is negligibly small as an bound. The inequality proves that each term in *any* sequence $\{u_k := x_k/z|\ k=1,2,\cdots,T\}$, which is to give uniform random number on a computer, is approximated as $v_k - 1/z < u_k < v_k$ within a small and uniform error bound $1/z \approx 2^{-30}$ by the corresponding sequence

$$\{v_k := r_{k-1}/d|\ k=1,2,\cdots,T, \qquad 0 < v_k < 1, \qquad r_{k-1} \equiv nz^{k-1}\ \mathrm{mod}(d)\},$$

which is precisely the multiplicative congruential random number sequence generated by (d,z,n). As a mathematical principle, therefore, we need only to concentrate on finding a multiplicative congruential random number generator (d,z,n) of sufficiently long period T with good uniformity and independence. This transparent and firm perspective on the problem is further reinforced by spectral tests which are inseparably tied to multiplicative congruential generation of random numbers.

There have been two distinct types in prior arts for the pair (d,z) of multiplicative congruential generator. One is formed by a large odd prime modulus d=p with its primitive root multiplier z, and realizes the period $T=\varphi(p)=p-1$, where $\varphi$ is the Euler's function. The other consists of a modulus $d=2^i$ with $i \geq 4$ and of any multiplier $z \equiv 5\ \mathrm{mod}(8)$ for the period $T=2^{i-2}$. Both of these generators realize the largest period among all possible choices of multipliers for respective moduluses, and feasibly admit their respective spectral tests by plain mathematical principles, putting aside the resultant heavy computational burdens. Present inventions are direct descendants of the former, the pair of an odd prime modulus and its primitive root. Fishman and Moore (1986) gave their monumental spectral tests on the Mersenne prime modulus $d=p=2^{31}-1$, and revealed the general and decisive fact that a good generator (d,z) can only be found by testing *all* primitive roots *exhaustively* without any preoccupation. This finding, however, disclosed a fundamental difficulty; the amount of computation increases in proportion to $d^{\theta}$ with the exponent $\theta$ not less than 3/2 in exhaustive spectral tests. The test itself should be performed on the fastest computer of the time. And the computer requires its equipped random number generator to provide the largest amount T of random numbers that can be consumed or computed in simulations of a month, say. This T should be the lower limit of the period that the random number generator (d,z) should have, but $T \leq d/2$ is a structural limitation of multiplicative congruential method. Thus, computers have the limit of computability proportional to d, but exhaustive spectral tests demand the total amount proportional to $d^\theta$ of computation with $\theta \geq 3/2$. This is the problem of non-computability. Nakazawa and Nakazawa (2012a,b) found that a breakthrough exists for this difficulty in the use of moduluses formed by products of *two* odd-prime-powers. Such methods would reduce the computing time of exhaustive spectral tests to $O(d^\theta)$ with $\theta < 1$, while reserving the ratio of the period T to the modulus d as large as the case of a prime and its primitive root pair.

Fishman and Moore (1986): G. S. Fishman and L. R. Moore, An exhaustive analysis of multiplicative congruential random number generators with modulus 231-1. SIAM Journal on Scientific and Statistical Computing, Vol. 7 (1986), pp. 24-45.

Nakazawa and Nakazawa (2012a): N. Nakazawa and H. Nakazawa, Computational progress in spectral tests of multiplicative congruential generators for uniform and independent random numbers realized by moduluses formed with two odd primes. Filename computable.pdf, uploaded in http://www10.plala.or.jp/h-nkzw/ (October 26, 2012).

Nakazawa and Nakazawa (2012b): N. Nakazawa and H. Nakazawa, Multiplicative congruential generators with moduluses formed by two odd-prime-factors for uniform and independent random numbers I. Computational analysis of structures. Filename revpopesq1.pdf, uploaded in http://www10.plala.or.jp/h-nkzw/ (September 15-17, 2012, corrected on October 31,2012).

## Brief Summary of Inventions

Following items (i1)-(i3) outline the inventions to be presented. Though they refer to new designs for respective, distinct facet of the generation of uniform and independent random numbers, their integration will be seen to work strongly reinforcing each other.

(i1) A new, extended design of spectral tests as a strengthened sieve to extract an excellent pair (d,z) of an odd modulus d and the multiplier z coprime to d as multiplicative congruential generator for uniform and independent random numbers with reliable statistical performance.

(i2) A new system of designs for the multiplicative congruential generator (d,z) comprising the modulus d and the multiplier z characterized by the following conditions 2a)-2e);

2a) the modulus $d=d_1 d_2$ is a product of pairwise coprime factors $d_1$ and $d_2$ formed by two distinct odd primes $p_1$ and $p_2$ as $d_k = p_k^{\wedge} i_k$ for k=1,2 with indices $i_1 \geq 1$ and $i_2 \geq 1$,
2b) said odd prime $p_1$ has the form $p_1 = 2q+1$ and said odd prime $p_2$ has the form $p_2 = 4r+1$ with another odd primes q and r,
2c) the multiplier z satisfies either the congruence relation $z \equiv z_1 \bmod(d_1)$ or the congruence relation $z \equiv -z_1 \bmod(d_1)$ for a primitive root $z_1$ of $d_1$,
2d) the multiplier z satisfies the congruence relation $z \equiv z_2 \bmod(d_2)$ for a primitive root $z_2$ of $d_2$,
2e) noted odd primes $p_1$, $p_2$, q, r are all distinct.

(i3) Another new system of designs for the multiplicative congruential generator (d,z) comprising the modulus d and the multiplier z specified by the following conditions 3a)-3e);

3a) the modulus $d=d_1 d_2$ is a product of pairwise coprime factors $d_1$ and $d_2$ formed by two distinct odd primes $p_1$ and $p_2$ as $d_k = p_k^{\wedge} i_k$ for k=1,2 with indices $i_1 \geq 1$ and $i_2 \geq 1$,
3b) said odd prime $p_1$ has the form $p_1 = 2q_1 + 1$ and said odd prime $p_2$ has the form $p_2 = 2q_2 + 1$ with another odd primes $q_1$ and $q_2$,
3c) the multiplier z satisfies either the congruence relation $z \equiv z_1 \bmod(d_1)$ or the congruence relation $z \equiv -z_1 \bmod(d_1)$ for a primitive root $z_1$ of $d_1$,
3d) the multiplier z satisfies either the congruence relation $z \equiv z_2 \bmod(d_2)$ or the congruence relation $z \equiv -z_2 \bmod(d_2)$ for a primitive root $z_2$ of $d_2$,
3e) noted odd primes $p_1$, $p_2$, $q_1$, $q_2$ are all distinct.

The use of the noted invention (i2) should be started by taking sufficiently many primitive root multipliers $z_1$ of $d_1$ and $z_2$ of $d_2$ in said items 2c) and 2d). They are recommended to be sieved in preparation by the extended spectral test of (i1). Then, taking selected $\pm z_1$ and $z_2$ one after another, we need to use Sun Tzu's construction for the multiplier z by the system of congruence relations in 2c) and 2d), to let (d,z) undergo (i1) as the second stage spectral test, and obtain the aimed excellent generator for use on computers. Likewise, the use of noted invention (i3) should be started by taking sufficiently many primitive root multipliers $z_1$ of $d_1$ and $z_2$ of $d_2$ in said items 3c) and 3d). They are again recommended to be sieved in preparation by the extended spectral test of (i1). Taking selected candidate $\pm z_1$ and $\pm z_2$ one after another, we use Sun Tzu's construction for the multiplier z again by the system of congruence relations in 3c) and 3d), let (d,z) undergo (i1) as the second stage spectral test, and will be left with the aimed excellent generator for use on computers.

**Detailed Description of Inventions**

**Detailed Description of the 1st Invention**

In order to expel ambiguities from descriptions, the sequence {n, nz, nz$^2$,···} from the multiplicative congruential generator (d,z,n) will first be taken as an infinite sequence *without* equivalence relations modulo d. Corresponding random numbers are reproduced as

$$v_1 = r_0/d, \qquad r_0 = n, \qquad 1 < r_0 < d,$$

$$v_k = r_{k-1}/d, \qquad r_k \equiv nz^k \bmod(d), \qquad 1 < r_k < d, \qquad k=1,2,\cdots.$$

We start with the 2nd degree spectral test taking consecutive 2-tuples from the generated sequence. Define the vector $Q_k := (nz^{k-1}, nz^k) = nz^{k-1}(1,z)$. Let $Q_k'$ denote any integer vector with coordinates equivalent to those of $Q_k$ modulo d. Manifestly, $Q_k'$ is obtained from the vector $Q_k$ by some integral multiples of d translations along coordinate axes. Along the 2nd coordinate axis the d translation is effected by adding the vector $e_2 := (0,d)$. And the d translation along the 1st coordinate axis is realized by adding $e_1' := d(1,z) - z(0,d) = d(1,z) - ze_2$. Therefore, every vector $Q_k'$ with coordinates equivalent to $Q_k$ modulo d is an integral linear combination of *basis* vectors

$$e_1 := (1,z), \qquad e_2 := (0,d),$$

which are linearly independent in the sense that they give a non-zero determinant. All vectors or points with coordinates equivalent to those of $Q_k$ are thus *in* the lattice spanned by basis vectors (or bases) $\{e_1, e_2\}$. We say points are *in* the lattice, because they cannot occupy the whole of lattice points. Typically, $Q_k'$ cannot be any of points whose one or both of coordinates are equivalent to 0 modulo d. Let $C_d$ denote the square in the Euclidean plane $E_2$ issuing from the origin with the interval [0,d) as sides along axes. A significant fact is that this lattice is destined to have only d lattice points in $C_d$. As a handy proof we may note that vectors $\{e_1, e_2\}$ span the area d by their determinant, while the square $C_d$ has the area d$^2$. More convincingly, a lattice vector $je_1 + ke_2 = j(1,z) + k(0,d) = (j, jz+kd)$ with integers j,k has the first component j which can take only d different values {0,1,···,d-1} in $C_d$; once j is fixed, the integer k is unique so as for the second component jz+kd to be in the interval [0,d). The square $C_d$ thus has exactly d lattice points. The generator (d,z,n) gives points $\{Q_k\}$ in $C_d$ whose modulo d equivalents are seated among these d lattice points. The rate of occupation of these d lattice seats can only be (d-1)/d at the maximum.

Arguments may be extended to consecutive L-tuples of integers with L=2,3, ··· to give,

$$(nz^{k-1}, nz^k, \cdots, nz^{k+L-1}) = nz^{k-1}(1,z,\cdots, z^{L-1}), \qquad k=1,2,\cdots.$$

Regarded as a vector or a point in the L-dimensional Euclidean space $E_L$, this vector and all of its d translations along coordinate axes are obviously in an L-dimensional lattice spanned by basis vectors

$$e_1 = (1, z, z^2, \cdots, z^{L-2}, z^{L-1}),$$

$$e_2 = (0, d, 0, \cdots, 0, 0),$$

$$e_3 = (0, 0, d, \cdots, 0, 0),$$

$$\cdots\cdots\cdots\cdots$$

$$e_{L-1} = (0, 0, 0, \cdots, d, 0),$$

$$e_L = (0, 0, 0, \cdots, 0, d).$$

A notable fact is that this lattice has again d lattice points in the L-dimensional hypercube $C_d$ issuing from the origin with sides of length d along axes. This will be obvious by two proofs for the case of dimension L=2 given above.

Said point, that only d lattice points exists in $C_d$ irrespective of the dimension L, is the first core of difficult problems arising with spectral tests. Its comprehension requires first the notion of the *usable* period of multiplicative congruential sequences. Take an odd prime modulus d=p for simplicity. If the multiplier z is a primitive root of p, then the generator (p,z) gives the cyclic sequence $\{1, z, z^2, \cdots, z^{p-1} \equiv 1\}$ modulo p; the last term is added here to recall the little theorem of Fermat. Each of integers $\{1, 2, \cdots, p-1 \equiv -1\}$ modulo p is visited by the cyclic sequence once in a period $T = \varphi(p) = p-1$. Hence $z^{T/2} = z^{(p-1)/2} \equiv -1 \bmod(p)$ holds in the midpoint. The rest of the sequence is $\{-1, -z, -z^2, \cdots\}$, and is essentially a repetition of the first part. Only the length $T' = T/2$ of the sequence is *usable for independent random numbers.* Since the computational load of random number generation with a generator (d,z) is proportional to d, we define the *computational efficiency,* or simply the *efficiency,* of this (d,z) generator as $\tau := T'/d \approx 1/2$. This result, for the pair of an odd prime and its primitive root multiplier, suggests generally and correctly that $\tau \approx 1/2$ is the upper bound for all multiplicative congruential generators. Detailed examinations reveal that there exist two types (a) and (b) of moduluses noted below that realize this largest efficiency $\tau \approx 1/2$ by suitable choices of the multiplier z:

(a) $d = p^i$ with an odd prime p and a power index $i \geq 1$,
(b) $d = \{(p_1)^{\wedge} i_1\} \times \{(p_2)^{\wedge} i_2\}$ with distinct odd primes $p_1$ and $p_2$ and indices $i_1, i_2 \geq 1$, where one of primes, say $p_1$, gives an odd $q_1 := (p_1 - 1)/2$ and the other gives an even $q_2 := (p_2 - 1)/2$.

The extensive proof with the specification of multipliers is seen in the Chinese Patent Application published in the Journal of Patent for Invention with the publication number CN1031356961A; the subject was later noted in Nakazawa and Nakazawa (2012b).

Suppose that simulations demand the period $T \approx 2^{57}$. The generator (d,z) then needs the modulus to be $d \approx 2^{58}$ or larger. Distinct 2-tuples $(z_k, z_{k+1})$ from *usable* multiplicative congruential sequence exist no more than d/2 and fill only up to 1/2 of lattice points in the square $C_d$ of sides [0,d) in the Euclidean plane $E_2$. Consecutive 2-tuples of *normalized* independent random numbers thus can at most be $2^{57}$ in the unit square $C_1$ in $E_2$. If sides of $C_1$ is divided with the width $d^{-1/2} \approx 2^{-29}$, small squares or cells with the area $d^{-1}$ can be occupied with probability 1/2 by distinct consecutive 2-tuples of random numbers arising in one usable period. The 2nd degree spectral test aims to assess the geometrical configuration of these occupied cells via the geometry of the lattice points in which noted 2-tuples are seated. The method of assessment will be noted shortly. If the geometrical configuration of the lattice is better, we shall have less of reasons to deny the statistical inference that random numbers are distributed independently and uniformly. Thus, spectral tests are exquisitely fit to structures of multiplicative congruential random number generators. At the same time, however, the knowledge reveals that the success is slender. Take the case of a consecutive L-tuple $Q_k := (z^{k-1}, z^k, \cdots, z^{k+L-1})$ for $L = 2, 3, \cdots$ forming a point in the hypercube $C_d$ of sides [0,d) in the L-dimensional Euclidean space $E_L$. There exist again at most only d/2 distinct points formed in the usable period. Therefore, L-tuples of consecutive random numbers should meaningfully be observed by dividing the unit interval by the width $\delta = d^{-1/L}$, which is estimated as $1/512 > \delta > 1/1024$ in the case of $d = 2^{58}$ and L=6. This width is small but coarse from the viewpoint of a single precision fixed real numbers on computers. Yet the statistical premise, that consecutives L-tuples from the multiplicative congruential sequence looks uniform and independent, will be less dubious if points in this coarse division of the unit hypercube in $E_L$ are occupied more evenly. We should stress that the power of spectral tests diminishes with the increase of the *degree* L of the test defined by the consecutive number L of random numbers taken for tests, but conversely also that the lower degree spectral tests should be treated as the key of the statistical precision in random number problems.

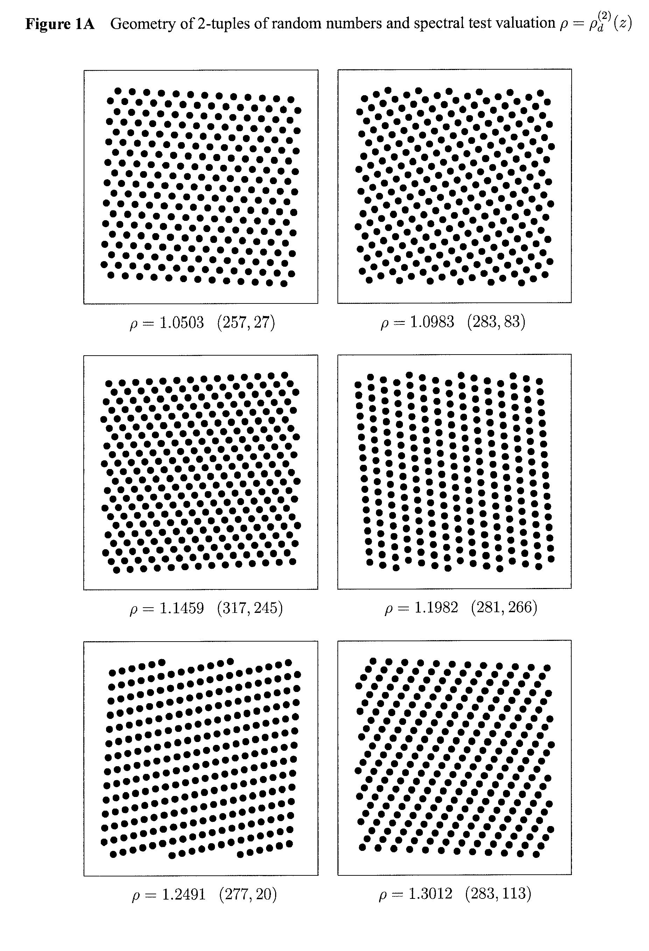

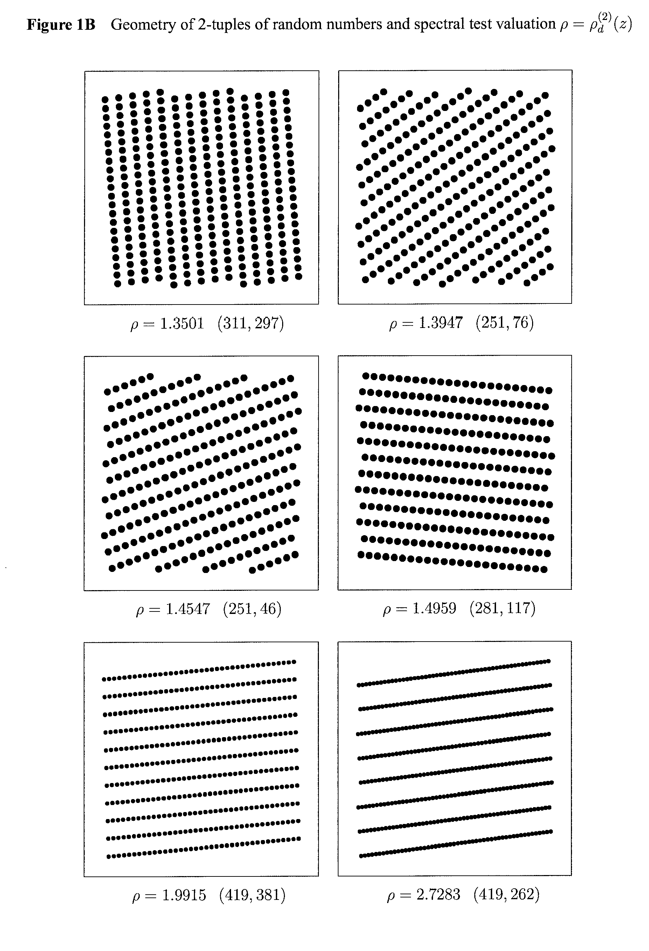

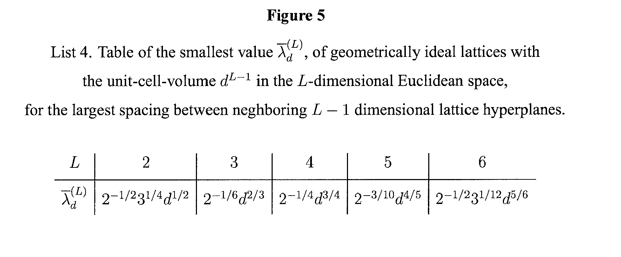

On the basis of qualitative knowledge on spectral tests, we now turn to their quantitative aspects. We start again with the visible case L=2. The 2 dimensional lattice of our concern is determined by (d,z) and spanned by said basis vectors $e_1$, $e_2$. This lattice has many lattice lines (lattice *hyperplanes* of L-1 dimension, in a general dimension L≥2) that passes through arbitrary L=2 lattice points; in fact infinitely many lattice points are on the extension of this lattice line. Among multitude of distances between neighboring parallel lattice lines, let the largest distance be denoted as $\lambda_d^{(L)}(z)$ with L=2. If the area spanned by basis vectors $e_1$, $e_2$ is fixed to d, there enter geometrical restrictions, which stipulate $X_d^{(2)}(z)$ to have a lower bound $\overline{\phantom{aa}},\lambda d^{(2)}$ determined by d. This lower bound is the value of said largest distance for the *geometrically ideal form* of the lattice in $E_2$; in L=2 dimension this ideal form is the triangular lattice. In the general dimension L there exists a similar lower bound: If the volume spanned by lattice basis vectors given by their determinant is fixed to $d^{L-1}$, as seen readily from noted basis vectors $\{e_1, e_2, \cdots, e_L\}$, geometrical restrictions stipulate $\lambda_d^{(L)}(z)$ to have a lower bound $\overline{\phantom{aa}},\lambda_d^{(L)}$, the value given by the geometrically ideal form of the lattice. Define the ratio $\rho_d^{(L)}(z):=\lambda_d^{(L)}(z)/\overline{\phantom{aa}},\lambda_d^{(L)}$. Since the geometrically ideal lattice requires irrational coordinates for their description, $\lambda_d^{(L)}(z)$ can never reach the ideal value $\overline{\phantom{aa}},\lambda_d^{(L)}$, and the inequality $\rho_d^{(L)}(z):=\lambda_d^{(L)}(z)/\overline{\phantom{aa}},\lambda_d^{(L)}> 1$ holds true. If $\rho_d^{(2)}(z)$ is closer to 1, the lattice in $E_2$ generated by 2-tuples emitted from the generator (d,z) is closer to the ideal triangular form, and its lattice points are distributed more evenly to all directions. Spectral tests have so far been used to evaluate $\rho_d^{(L)}(z)$ for L=2, 3, $\cdots$, 6, in order to select the multiplier z that realizes $\rho_d^{(L)}(z)$ closest to 1 from above for 2≤L≤6. The interrelation between values of $\rho_d^{(L)}(z)$ and shapes of the lattice will be grasped intuitively from Figures 1A and 1B that depict consecutive 2-tuples of points showing how they are distributed for some typical values of $\rho=\rho d^{(2)}(z)$. The lowest bounds $\overline{\phantom{aa}},\lambda_d^{(L)}$ for 2≤L≤6 are given in Figure 5 as List 4. The epoch-making work of Fishman and Moore (1986) showed that the criterion, for $\rho_d^{(L)}(z)<1.25$ to hold with all L in the range 2≤L≤6, is versatile in giving not too many but not too few passer primitive root multipliers z for the Mersenne prime modulus $d=2^{31}-1$. Their criteria have since been proved to be a general and powerful tool to select good generators with various forms of moduluses and multipliers. We shall also be persuaded intuitively by Figures 1A and 1B that this criterion of Fishman and Moore will certainly be appropriate. We stress that the form of the multiplicative congruential generator (d,z) may be quite general in order for the present arguments *on the geometrical form of the lattice* to remain valid: The modulus d may be any *odd* integer, and the multiplier z need only be coprime to d. Lattice structures with noted basis vectors are then all well-defined, and spectral tests will work as the assessments on the geometrical form of the lattice, though the power of spectral test valuations will be diminished if the covering rate of lattice point seats by points of L-tuples is small.

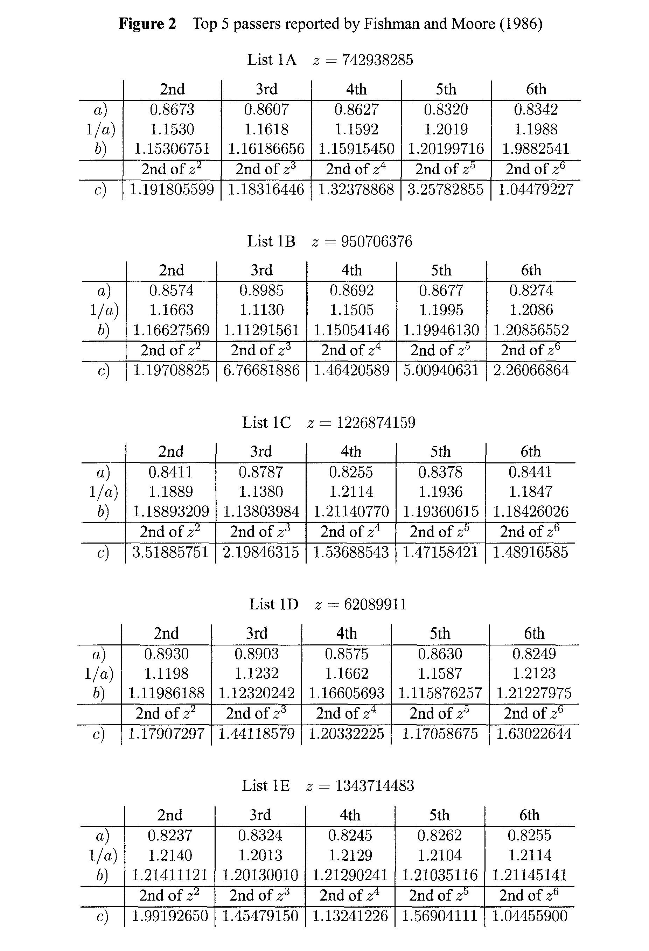

We proceed deeper into the meaning of spectral tests. Let us again start with the 2nd degree tests. As discussed, tests examine whether the relation of $z^k$ and $z^{k+1}$ may be said independent. We further hope to infer that $z^k$ and $z^{k+2}$ will be independent. Whether this is true or not is readily examined by taking the generator $(d,z^2)$ and testing it spectrally. Likewise we wish to have the generator $(d,z^3)$, $(d,z^4)$, $\cdots$ to give good valuations as generators of independent random variables. In Figure 2 we post List 1A to List 1E that reproduce 5 excellent primitive root generators found by Fishman and Moore (1986) for the Mersenne prime modulus $d=p=2^{31}-1$. The progress of CPU's on computers in the long span of time thereafter made spectral tests on this modulus very easy now. The rows denoted a) in List 1A to List 1E show valuations found by Fishman and Moore. The next row 1/a) shows the reciprocal of these valuations, which agree with the corresponding $\rho_d^{(L)}(z)$ of our notation. The row b) shows the re-calculation of $\rho_d^{(L)}(z)$ for 2≤L≤6 to see the agreement with 1/a). The remaining row noted c) shows the 2nd degree performance $\rho_d^{(2)}(z^k)$ for 2≤k≤6 of multipliers $z^2$, $z^3$, $\cdots$, $z^6$. Consulting Figures 1A and 1B, we recognize that these multipliers are not good as regards the independence of random numbers generated by their powers.

Said discovery is almost trivial computationally, but the implications are heavy and depressing: Any existing multiplicative congruential generator (d,z) should be re-examined with their valuations on $(d,z^2)$, $(d,z^3)$, $\cdots$; if the performances are not satisfactory, they should be replaced with generators with more reliable statistics. We post this design of spectral tests as Claim 1 to ensure its immediate and wide applications.

## Detailed Description of Second and Third Inventions

From a more general point of view the facts listed in Figure 2 disclose that the Mersenne prime modulus $d=p=2^{31}-1$ might not have a primitive root multiplier with satisfactory performance. We need to examine more of odd primes, odd-prime-powers, or products of two such odd-prime-powers by spectral tests, and find good multiplicative congruential generators. Above all, the modulus $d=p=2^{31}-1$ is too small for computers of our day, and we should proceed to $d≈2^{48}$ or larger, say. We are thus confronted with difficulties of computability, and the sole way out is to choose moduluses formed by two odd-primes or odd-prime-powers. We further found the more of necessity to solve new problems arising with associated generators $(d,z^2)$, $(d,z^3)$, $\cdots$. We need first to examine their periods inquiring also on the existence or not of -1 in sequences they generate. Then at least 2nd degree tests of $(d,z^2)$, $(d,z^3)$, $\cdots$ should be performed to find the desirable range of (d,z), and finally go to 3rd to 6th spectral tess of (d,z). Computational burdens should be diminished by all means. By grace of natural numbers, there exist two new designs which are particularly suited to alleviate some portions of these burdens. We concentrate on their description, refraining from general or exhaustive surveys.

We start from two mathematical corollaries. Let an odd prime p be expressed as p=2q+1, and assume that the integer q is again an odd prime. Examples p=7 with q=3, or p=23 with q=11 prove the existence of such prime pairs. In fact, computer experiments suggest their abundant, limitless existence. There holds the following.

**(Corollary 1)** If an odd prime $p \geq 7$ has the form p=2q+1 with another odd prime q, then z=2 either is a primitive root of p with the order $\varphi(p)$=p-1=2q or has the order q as a negative of a primitive root of p.

**(Proof)** We take the group $Z_p \equiv \{1,2,\cdots,p\text{-}1\text{=}2q\}$ of integers consisting of 2q elements defined by the multiplication modulo p. Lagrange's theorem stipulates that the order of z=2 is a divisor of 2q. The assumption $p \geq 7$ implies that this order cannot be 2. Therefore, it is either q or 2q because q is an odd prime. If the order of z is 2q, then z=2 is a primitive root of p. If the order of z=2 is q, then $(-z)^q \equiv -z^q \equiv -1 \bmod(p)$, and -z is a primitive root of p. ■

Consider now an odd prime p of the form p=4r+1 with another odd prime r. Examples p=13 or 29, and computer experiments readily convince us that such an odd prime p will exist without limit.

**(Corollary 2)** If an odd prime $p \geq 13$ has the form p=4r+1 with another odd prime r, then z=2 is a primitive root of p.

**(Proof)** Direct computations of the power of 2 for p=13 show that 2 is a primitive root modulo 13. We therefore assume $p \geq 29$, $r \geq 7$. The group of integers coprime to p consists of $\varphi(p)$=4r equivalence classes, and Lagrange's theorem stipulates that the order of z=2 is a factor of 4r, which are exhausted by {1, 2, 4, r, 2r, 4r}. The assumption $p \geq 29$ proves that the order of z=2 is not 1, 2, 4. We prove that $z^{2r} \equiv -1 \bmod(p)$; for, this proves that $z^r$ is not equivalent to 1 modulo p, so that the order of z=2 is 4r and full. The product

$$M := (2 \cdot 1) \cdot (2 \cdot 2) \cdot \ \cdots \ \cdot (2 \cdot r) \cdot \{2 \cdot (r+1)\} \cdot \{2 \cdot (r+2)\} \cdot \ \cdots \ \cdot \{2 \cdot (2r)\} = 2^{2r}(2r)!$$

has another expression modulo p:

$$M = 2 \cdot 4 \cdot \ \cdots \ \cdot (2r) \cdot (2r+2) \cdot (2r+4) \cdot \ \cdots \ \cdot (2r+2r)$$

$$= 2 \cdot 4 \cdot \ \cdots \ \cdot (2r) \cdot \{p-(2r-1)\} \cdot \{p-(2r-3)\} \cdot \ \cdots \ \cdot (p-1)$$

$$\equiv (-1)^r (2r)! = -(2r)! \ \bmod(p).$$

Note that r is odd. We thus have $2^{2r}(2r)! \equiv -(2r)! \bmod(p)$, or $2^{2r} \equiv -1 \bmod(p)$ because (2r)! is coprime to the odd prime p=4r+1. ■ This proof was communicated to Hiroshi Nakazawa by Naoya Nakazawa on April 17, 2013.

Computations with noted corollaries at once suggest the following:

**(Conjecture 3)** If an odd prime $p \geq 7$ has the form p=2q+1 with another odd prime q, then for any integral exponent $i \geq 1$ the multiplier z=2 either is a primitive root of $d=p^i$ with the order $\varphi(p^i)$=$2qp^{i-1}$=2qd/p, or is the negative of a primitive root of $p^1$ with the half full order $qp^{i-1}$=qd/p. **(End of Conjecture 3)**

**(Conjecture 4)** If an odd prime $p \geq 13$ has the form p=4r+1 with another odd prime r, then for any integral exponent $i \geq 1$ the multiplier z=2 is a primitive root of $p^i$ with the full order $\varphi(p^i)$ =$4rp^{i-1}$=4rd/p. **(End of Conjecture 4)**

These Conjectures are true if only they could be shown for the case i=2, but we could not arrive at the proof. Yet, computers prove that they are true up to $p<10^7=2^{23.25}$; they might well be imagined true and, if we need some modulus of the form $p^i$, we may readily let computers confirm the conjecture with z=2 at the start. Stated Corollaries and Conjectures suggest to design multiplicative congruential generators with only odd primes of noted types. They give $\varphi(p^i)$ with small numbers of prime factors, and facilitate the design of the generators (d,z) greatly. Besides conceptual and practical facility that we need to take only powers of 2 for multipliers in sweeping over primitive roots or their negatives, they enable us to find useful and realizable structures of periods elucidated below.

For accounts on the 2nd and the 3rd inventions, it will be advisable to summarize necessary notions. Computations to come are all performed on the stage of moduluses formed by two odd prime powers, and involve two main players, pairs of primitive roots for respective odd prime powers that construct multipliers by systems of congruence relations. Our concern is to compute periods realized by noted arrangements, and also to answer the question whether -1 arises or not in generated sequences. Arguments will be helped greatly by the following corollaries.

**(Corollary 5)** Let $d_1,d_2$ be mutually coprime integers, and let $z_k$ be a multiplier coprime to $d_k$ for k=1,2. Assume that the generator $(d_k,z_k)$ has the order or the period $T_k$, and they are synthesized into the generator (d,z) defined by

$$d:=d_1 d_2, \qquad z:\equiv z_k \bmod(d_k), \qquad k=1,2.$$

The *cyclic sequence,* generated from (d,z) and now defined as $G(z;d):\equiv\{1, z, z^2, \cdots\} \bmod(d)$, has the order or the period T as the least common multiple, $T:=LCM(T_1,T_2)$.

**(Proof)** At this occasion we refer to Sun Tzu's construction associated with his theorem that gives the solution z of noted system of congruence relations modulo d. Since $d_1$ and $d_2$ are coprime with $GCD(d_1,d_2)=1$, Euclidean algorithm ensures the existence of integers A, B satisfying $Ad_1+Bd_2=1$. Integers $U_1:=Bd_2=1-Ad_1$ and $U_2:=Ad_1=1-Bd_2$ are determined solely by $d_1$ and $d_2$ alone without relation to $z_1$ or $z_2$, and satisfy $U_j \bmod(d_k)= \delta_{jk}$. Therefore, a solution z of noted system of congruence relations is

$$z\equiv z_1 U_1+z_2 U_2 \bmod(d).$$

Any other solution z' gives $z-z'\equiv 0 \bmod(d_k)$ for both of k=1,2, so that z-z' is divisible by coprime $d_1$ and $d_2$. Hence $z'=z \bmod(d)$ holds true as the uniqueness modulo d. Direct computations of $z^j$ or the observation $z^j\equiv(z_k)^j \bmod(d_k)$ for k=1,2 at once prove

$$z^j\equiv(z_1)^j U_1+(z_2)^j U_2 \bmod(d), \qquad j=1, 2, \cdots.$$

Increasing j to T, we have

$$1\equiv z^T\equiv (z_1)^T U_1+ (z_2)^T U_2 \bmod(d),$$

for which $(z_k)^T\equiv 1 \bmod(d_k)$ should hold true for k=1,2. Therefore, the order or the period of G(z;d) is the least common multiple of $T_1$ and T2. ■

The statement below will be obvious.

**(Corollary 6)** Assume that the generator (d,z) or its cyclic sequence G(z;d) has the period or the order T. The generator $(d,z^j)$ or the cyclic sequence $G(z^j;d)$ realizes the period $T^{(i)}:=T/\{GCD(j,T)\}$ for any power index j=1,2,$\cdots$. **(End of Corollary 6)**

We may note a few summaries that will help discussions on the appearance or not of -1 in the cyclic sequence $G(z^j;d)$ given by the generator $(d,z^j)$, in particular when z is defined by $z\equiv z_k \bmod(d_k)$ for k=1,2 with coprime $d_1$ and $d_2$.

**(Corollary 7) (A1)** If the cyclic sequence G(z;d) does not include -1 mod(d), then cyclic sequences $G(z^j;d)$ for any index j=1,2,$\cdots$ are free from -1 modulo d. **(A2)** Resume the notation $T^{(j)}$ for the order or the period of the cyclic sequence $G(z^j;d)$ with any j=1, 2,$\cdots$. In order for $G(z^j;d)$ to include -1 mod(d), $T^{(j)}$ is necessarily even. The contraposition is: If $T^{(j)}$ is odd, the cyclic sequence $G(z^j;d)$ does not include -1 modulo d.

**(B)** If the modulus $d=d_1 d_2$ is a product of two coprime factors $d_1$ and $d_2$, and z is defined by $z\equiv z_k \bmod(d_k)$ for k=1,2, then following statements **(B1)** and **(B2)** hold true on the appearance or not of -1 in the cyclic sequence $G(z^j;d)$.

**(B1)** If at least one of component cyclic sequences $G(z_k;d_k)$ for k=1 or 2 is devoid of -1 modulo $d_k$, then the cyclic sequence $G(z^j;d)$ for any index j=1,2,$\cdots$ is free from -1 modulo d.

**(B2)** In the case of a composite modulus $d=d_1 d_2$, an even period $T^{(j)}$ for any j=1, 2, $\cdots$ of the cyclic sequence $G(z^j;d)$ is not always sufficient for the appearance of -1 modulo d in $G(z^j;d)$. A necessary and sufficient condition for the appearance of -1 modulo d in $G(z^j;d)$ is that $T^{(j)}$ is even *and* cyclic subsequences $\{G(z';d_k)|\ z':\equiv(z_k)^j \bmod(d_k), k=1,2\}$ have -1 modulo $d_k$ *in tune* at $T^{(j)}/2$, i.e. there hold $(z_k)^\wedge(T^{(j)}/2) \equiv -1 \bmod(d_k)$ for both of k=1 and 2.

**(Proof) (A1)** The assertion is obvious, because the cyclic sequence or the cyclic group $G(z^j;d)$ for any j=2,3,$\cdots$ is a subset or a subgroup contained in the larger reduced residue class group G(z;d) of integers modulo d.

(A2) If the cyclic sequence $G(z^j;d)$ has $-1\equiv d-1 \bmod(d)$ at $0<T'<T^{(j)}$, then we have

$$(z^j)^\wedge T'\equiv -1 \bmod(d), \qquad (z^j)^\wedge(2T') \equiv 1 \bmod(d).$$

Thus, $0<2T'<2T^{(j)}$ is a multiple of $T^{(j)}$, and $2T'=T^{(j)}$ holds true, $T^{(j)}$ is necessarily even with $T'=T^{(j)}/2$.

**(B1)** If the cyclic sequence G(z;d) has $-1 \equiv d-1 \bmod(d)$, then $G(z_k;d_k) \equiv G(z;d) \bmod(d_k)$ contains $-1 \bmod(d_k)$ for *both* of k=1,2. The contraposition proves the assertion.

**(B2)** We shall soon see an example of $G(z^j;d)$ with an even $T^{(j)}$ but without $-1$ in the cyclic sequence. We prove the necessary and sufficient part. Necessity of an even $T^{(j)}$ is stated in **(A2)**, and its proof shows that $(z^j)^\wedge(T^{(j)}/2) \equiv -1 \bmod(d)$. Therefore, we have relations

$$(z^j)^\wedge(T^{(j)}/2) \equiv \{(z_k)^j\}^\wedge (T^{(j)}/2) \equiv -1 \bmod(d_k), \quad k=1,2,$$

which prove the necessary part **of (A2).** Suppose conversely that $T^{(j)}$ is even and that the congruence relations $\{(z_1)^j\}^\wedge(T^{(j)}/2) \equiv -1 \bmod(d_1)$ and $\{(z_2)^j\}^\wedge(T^{(j)}/2) \equiv -1 \bmod(d_2)$ hold true. Sun Tzu's construction proves $(z^j)^\wedge(T^{(j)}/2) \equiv \{(z_k)^j\}^\wedge(T^{(j)}/2)$ $\bmod(d_k)$ for k=1,2, so that $(z^j)^\wedge(T^{(j)}/2)$ is a modulo d unique solution of this system of congruence relations

$$(z^j)^\wedge(T^{(j)}/2) \equiv -1 \bmod(d_k), \quad k=1,2.$$

Trivially $(z^j)^\wedge(T^{(j)}/2) \equiv -1 \bmod(d)$ is a solution, and the proof is complete. ∎

We turn to describe two inventions which are on the design of multiplicative congruential generator (d,z). The one will later be posted as Claim 2, and elucidated from here. Let (d,z) be the multiplicative congruential generator fulfilling the 7 conditions **(2a)-(2g)** noted below:

**(2a)** The modulus d is a product of two coprime factors $d=d_1 d_2$, where $d_1$ and $d_2$ will be called submoduluses,

**(2b)** the submodulus $d_1=(p_1)^\wedge i_1$ is a power of an odd prime $p_1$ with an integral index $i_1 \geq 1$ and the odd prime $p_1$ has the form $p_1=2q+1$ with another odd prime q,

**(2c)** the submodulus $d_2=(p_2)^\wedge i_2$ is a power of an odd prime $p_2$ with an integral index $i_2 \geq 1$ and the odd prime $p_2$ has the form $p_2=4r+1$ with another odd prime r,

**(2d)** odd primes $p_1$, $p_2$, q, r are all distinct,

**(2e)** the multiplier z is defined by the system of congruential equations,

$$z \equiv z_k \bmod(d_k), \quad k=1,2,$$

where $z_1$ and $z_2$ will be called submultipliers,

**(2f)** the submultiplier $z_1$ is either a primitive root, or the negative of a primitive root, of the submodulus $d_1$,

**(2g)** the submultiplier $z_2$ is a primitive root of the submodulus $d_2$.

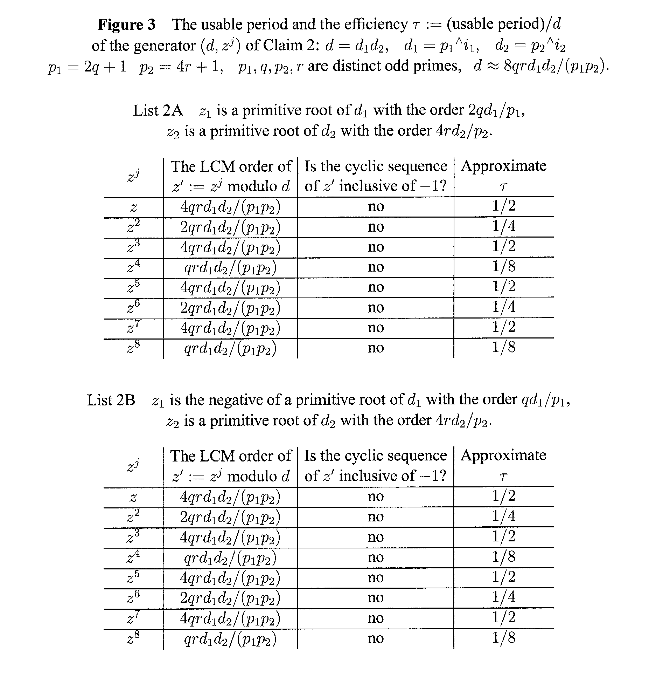

Performances of these designs are tabulated in Figure 3 as List 2A and List 2B. Take first the design that uses in **(2f)** a primitive root $z_1$ of the submodulus $d_1=(p_1)^\wedge i_1$ for the submultiplier modulo $d_1$. We start to work with the generator $(d_1,z_1)$, to be called the subgenerator. By assumption $z_1$ has the largest order modulo $d_1$,

$$T_1 := \varphi(d_1) = \{(p_1)^\wedge(i_1-1)\}(p_1-1) = 2qd_1/p_1.$$

Similarly, the subgenerator $(d_2,z_2)$ has $z_2$ with the largest order modulo $d_2$,

$$T_2 := \varphi(d_2) = \{(p_2)^\wedge(i_2-1)\}(p_2-1) = 4rd_2/p_2.$$

The generator $(d=d_1 d_2,z)$ is defined by the system of congruence relations specified in **(1e),** and by **(Corollary 5)** the synthesized (d,z) has the least common multiple order or the period T,

$$T:=LCM(T_1,T_2)=LCM(2qd_1/p_1,4rd_2/p_2)=4qrd/(p_1p_2).$$

The order of $(d,z^j)$ may now be computed by **(Corollary 6)** for any $j=1,2,3,\cdots$:

$$T^{(j)}:=\{\text{the period of } G(z^j;d)\}=T/GCD(j,T)=T/GCD(j,4qrd/(p_1p_2)).$$

This formula gives three meaningful cases, thanks to premises **(2a)-(2d)**:

**(2A1)** If $j<\min(q,r)$ is odd, then the order $T^{(j)}=T$.
**(2A2)** If $j<\min(q,r)$ is even but not a multiple of 4, then $T^{(j)}=T/2$.
**(2A3)** If $j<\min(q,r)$ is a multiple of 4, then $T^{(j)}=T/4$.

We should turn next to examine whether -1 arises or not in the cyclic sequence $G(z^j;d)$ and find the *usable* period, to be denoted $T_u^{(j)}$, of $G(z^j;d)$ for independent random numbers. We should creep through the situation that submultipliers $z_1$, $z_2$ are primitive roots and necessary itinerate respective -1 in their cyclic sequences. We therefore resort to **(B2)** and **(A1)** of **(Corollary 7)** and show the detuning due to $G(z_1;d_1)$. From $T=4qrd/(p_1p_2)$ and $T/2=T_1\times$(an integer), we have

$$(z_1)^\wedge(T/2)=\{(z_1)^\wedge(T_1)\}^\wedge(\text{an integer})\equiv 1 \text{ mod}(d_1).$$

Thus, -1 does not arise in $G(z;d)$, and **(A1)** of **(Corollary 7)** ensures $G(z^j;d)$ to lack -1 for any index $j<\min(q,r)$. All orders or periods of cyclic sequences in Table 2A are usable: $T_u^{(j)}=T^{(j)}$. We conclude for the efficiency $\tau:=$(usable period length)/d,

**(2A1)** for rows with odd j: $\tau=T/d\approx 1/2$,
**(2A2)** for rows of even j not divisible by 4: $\tau=(T/2)/d\approx 1/4$,
**(2A3)** for rows with j divisible by 4: $\tau=(T/4)/d\approx 1/8$.

The proof of List 2A in Figure 3 is complete.

For accounts on List 2B in Figure 3 that shows performances of the invention forming the second half of Claim 2, we need first to give descriptions of the submultiplier that is the negative of a primitive root modulo $d_1$ as demanded by the design (2f). This submultiplier modulo $d_1$ will be denoted $-z_1$, implying that $z_1$ is a primitive root of $d_1$. The primitive root $z_1$ generates the cyclic sequence consisting of integers distinct modulo $d_1$,

$$\{1, z_1, (z_1)^2, \cdots, (z_1)^\wedge(T_1/2)\equiv -1, \cdots, (z_1)^\wedge(T_1)\equiv 1, \cdots\} \text{ mod}(d_1), \qquad T_1=2qd_1/p_1.$$

In particular integers $\{z_1, (z_1)^2, \cdots, (z_1)^\wedge(T_1/2-1)\}$ are not equivalent to $\pm 1$ modulo $d_1$. Therefore, the assumption of odd $T_1/2=qd_1/p_1$ proves that $(-z_1)^\wedge(T_1/2)\equiv 1 \text{ mod}(d_1)$ arises for the first time in the sequence $\{-z_1,(-z_1)^2,\cdots\}$. Thus the order or the period of the cyclic sequence $G(-z_1;d_1)$ is $T_1/2$ and odd. The submultiplier $-z_1$ is not a primitive root of $d_1$. Yet **(Corollary 6)** ensures that the order or the period of $G(z;d)$ is
(the order of z modulo d)$=LCM(T_1/2,T_2)=LCM(qd_1/p_1,4rd_2/p_2)=4qrd/(p_1p_2)$.
This is notably identical with the case of the primitive root submultiplier $z_1$, and all resulting orders of $z^j$ for $j<\min(q,r)$ are unchanged likewise. And the odd order of $-z_1$ stipulates that the cyclic subsequence $G(-z_1;d_1)$ lacks -1, and **(A2)** of **(Corollary 7)** proves that all of Table 2B are concerned with the case $T_u^{(j)}=T^{(j)}$. There is no change from List 2A, and all elements of List 2B follow.

Noticing the significance of testing $z^j$ for $j=2, 3, \cdots$ as multipliers, we found results summarized in Lists 2A and 2B of Figure 3. The efficiency $\tau$ was found to vary from 1/2 to 1/8, which may well be called a tame fluctuation, in particular in comparison to the case of the modulus $d=2^i$ to be elucidated later. In practice we shall have little occasion to use these random numbers up to d/8. Yet, the noted variation of usable periods of z, $z^2$, $\cdots$ might be felt a little conspicuous, though technologically it will be a natural idea to cut all usable periods down to d/8 artificially to avoid correlations invalidating independence. After all, we need heavy computations of spectral tests in order to have a generator (d,z) with reliable statistics, and it is unknown whether naturally flat and beautiful *usable* periods of z, $z^2$, $\cdots$ will contribute for

more multipliers to have better performances. Yet our intuition tempts us, whispering that a more flat or even usable periods might be better. The following invention of Claim 3 in fact ensures the flatness at the expense of diminishing the largest value of usable periods. The suggested design of this invention is specified by the 7 conditions **(3a)-(3g)** listed below.

**(3a)** The modulus d is a product of two coprime factors $d=d_1 d_2$, where $d_1$ and $d_2$ will again be called submoduluses,
**(3b)** the submodulus $d_1=(p_1)^{\wedge}i_1$ is a power of an odd prime $p_1$ to an integral index $i_1 \geq 1$, where $p_1$ has the form $p_1=2q_1+1$ with another odd prime $q_1$,
**(3c)** the submodulus $d_2=(p_2)^{\wedge}i_2$ is a power of an odd prime $p_2$ to an integral index $i_2 \geq 1$, where $p_2$ has the form $p_2=2q_2+1$ with another odd prime $q_2$,
**(3d)** odd primes $p_1$, $p_2$, $q_1$, $q_2$ are all distinct,
**(3e)** the multiplier z is defined by the system of congruential equations,

$$z \equiv z_k \bmod(d_k), \qquad k=1,\, 2,$$

where $z_1$ and $z_2$ will be called submultipliers,
**(3f)** the submultiplier $z_1$ is either a primitive root, or the negative of a primitive root, of the submodulus $d_1$,
**(3g)** the submultiplier $z_2$ is either a primitive root, or the negative of a primitive root, of the submodulus $d_2$.

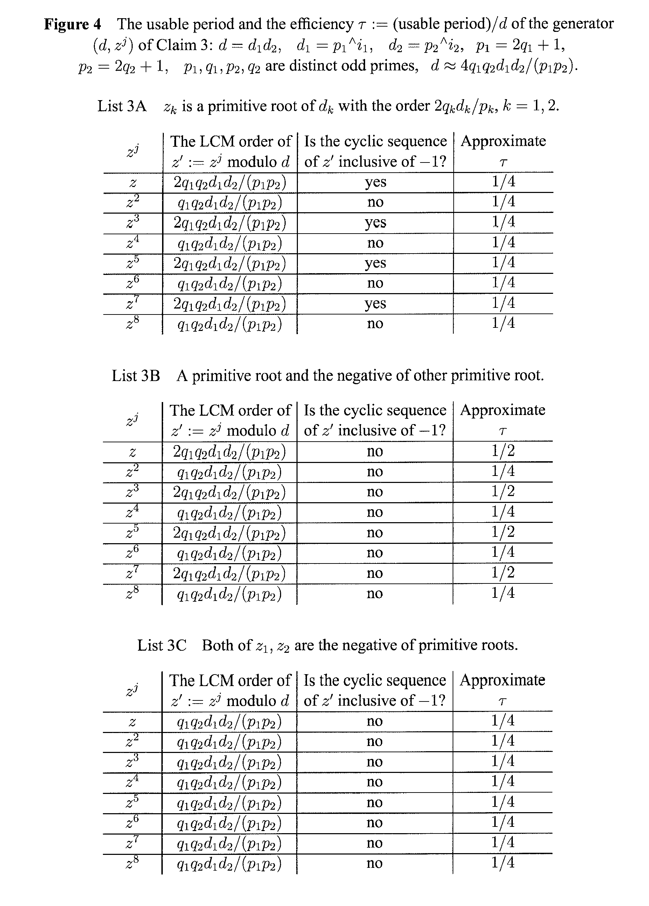

Resultant performances of the generator (d,z) are summarized in Figure 4 as List 3A to List 3C. We prove these lists, showing the merit of noted designs.

Take first the design that uses primitive root submultipliers $z_1$ and $z_2$. Subgenerators $(d_k,z_k)$ for k=1, 2 have even orders

$$T_k := \varphi(d_k)=(p_k)^{\wedge}(i_k-1)(p_k-1)=2q_k d_k/p_k,$$

and realize $(z_k)^{\wedge}(T_k/2) \equiv -1 \bmod(d_k)$ in their midways. Also, **(Corollary 5)** proves the order T of G(z;d) as

$$T := LCM(T_1,T_2)=LCM(2q_1 d_1/p_1, 2q_2 d_2/p_2)=2q_1 q_2 d/(p_1 p_2).$$

The order $T^{(j)}$ of the cyclic sequence $G(z^j;d)$ is now classified into two by **(Corollary 6):**

$$\textbf{(3A-odd)} \text{ odd } j<\min(q_1,q_2): T^{(j)}=T=T_1(T_2/2)=(T_1/2)T_2=(\text{even}),$$

$$\textbf{(3A-even)} \text{ even } j<\min(q_1,q_2): T^{(j)}=T/2=q_1 q_2 d/(p_1 p_2)=(\text{odd}).$$

Take first an even j with odd $T^{(j)}$. By **(A2)** of **(Corollary 7)** -1 is absent in $G(z^j;d)$, and $T_u^{(j)}=T^{(j)}$ is true. We have

$$(\text{the efficiency } \tau \text{ for any even } j)=T^{(j)}/d \approx 1/4,$$

and even j rows of List 3A are proved. In contrast, an odd j requires $\{(z_k)^j\}^{\wedge}(T^{(j)}/2) \bmod(d_k)$ to be computed for k=1,2. Since in this case $T^{(j)}/2=T/2=(T_1/2)(T_2/2)$ is a product of odd integers, we have

$$\{(z_k{}^j)\}{}^\wedge(T/2)=\{[(z_k{}^j)]{}^\wedge(T_k/2)\}{}^\wedge(\text{an odd integer})$$

$$=\{(z_k){}^\wedge(T_k/2)\}{}^\wedge\{j\times(\text{an odd integer})\}$$

$$\equiv(-1){}^\wedge(\text{an odd integer})\equiv-1\ \mathrm{mod}(d_k).$$

Cyclic subsequences $G((z_k{}^j;d_k)$ with any odd j for k=1 and 2 are thus in tune. And **(B2)** of **(Corollary 7)** proves $(z^j){}^\wedge(T/2)\equiv-1\ \mathrm{mod}(d)$. The usable period of $G(z^j;d)$ is $T_u{}^{(j)}=T^{(j)}/2=T/2$. The efficiency is $\tau=(T/2)/d\approx1/4$. These complete proofs of odd j rows and of the whole of List 3A.

Consider now the case that one of submultipliers is the negative of a primitive root, with results shown in List 3B of Figure 4. We take without loss of generality that the 1st of submultiplier is the negative of a primitive root, to be denoted as $-z_1$ with a primitive root $z_1$ of $d_1$, and that $z_2$ is a primitive root of $d_2$. The cyclic sequence $G(-z_1;d_1)$ has the order $T_1':=T_1/2=q_1d_1/p_1$, which is odd. Therefore, **(A2)** of **(Corollary 7)** approves that $G(z^j;d)$ is devoid of -1 for any j=1, 2, $\cdots$. The whole of orders of $G(z^j;d)$ is usable. The order of $G(z;d)$ is

$$(\text{the order of } z)=\mathrm{LCM}(T_1',T_2)=\mathrm{LCM}(q_1d_1/p_1,2q_2d_2/p_2)=2q_1q_2d/(p_1p_2)=T.$$

This is identical with the order T of the preceding case that both of submultipliers are primitive roots. Hence all cyclic sequences $G(z^j;d)$ for integral index $j<\min(q_1,q_2)$ have the identical orders as before. Reasonings prove the orders $T^{(j)}$ to be as follows:

$$\textbf{(3B-odd)} \text{ odd } j<\min(q_1,q_2):\ T^{(j)}=T=T_1(T_2/2)=(T_1/2)T_2,$$

$$\textbf{(3B-even)} \text{ even } j<\min(q_1,q_2):\ T^{(j)}=T/2=(T_1/2)(T_2/2).$$

The difference to the preceding case is that, irrespective of whether j is even or odd, the whole of all these orders are usable by the absence of -1. The efficiencies are thus concluded as

$$(\text{odd } j):\ \tau=T/d\approx1/2,\quad (\text{even } j):\ \tau=(T/2)/d\approx1/4,$$

which are all to be proved for Table 3B.

Take the remaining case that both of submultipliers are negative of primitive roots, to be denoted $-z_1$ and $-z_2$. Subgenerators $(d_1,-z_1)$ and $(d_2,-z_2)$ have respective orders $T_1'$ and $T_2'$:

$$T_1'=T_1/2=q_1d_1/p_1,\quad T_2'=T_2/2=q_2d_2/p_2.$$

The period T' of the synthesized $G(z;d)$ is given by

$$T':=\mathrm{LCM}(T_1',T_2')=\mathrm{LCM}(q_1d_1/p_1,q_2d_2/p_2)=q_1q_2d/(p_1p_2)=T/2,$$

which is odd. The cyclic sequence $G(z^j;d)$ with $j<\min(q_1,q_2)$ has one and the the same odd order $T'/\mathrm{GCD}(j,T')=T'$. From this, or by any of **(A1)**, **(A2)** or **(B1)** of **(Corollary** 7), all relevant generators lack -1 in their cyclic sequences, and the efficiency $\tau$ is unified to

$$\tau = T'/d = q_1 q_2 /(p_1 p_2) \approx 1/4.$$

These prove all of List 3C. ∎

In these last few paragraphs we need to describe computational procedures of spectral tests in more details. Later we also need to give some inferences on the case of the modulus $d=2^i$ with $i \geq 4$, but until then the multiplicative congruential generator $(d,z)$ are presumed to involve an arbitrary *odd* integer d for the modulus and any integer coprime to d for the multiplier. Let $L \geq 2$ be an integer. The consecutive L-tuple from $(d,z)$ is defined here to be $Q_k := (z^k, z^{k+1}, \cdots, z^{k+L-1}) = z^k(1, z \cdots, z^{L-1})$ for $k=0$ 1, $\cdots$ without the equivalence modulo d, and is regarded as a vector in the L-dimensional Euclidean space $E_L$. We have seen that their d-translations along coordinate axes are realized by integral linear combinations of vectors,

$$e_1 = (1, z, z^2, \cdots, z^{L-2}, z^{L-1}),$$
$$e_2 = (0, d, 0, \cdots, 0, 0),$$
$$e_3 = (0, 0, d, \cdots, 0, 0),$$
$$\cdots\cdots\cdots\cdots\cdots$$
$$e_{L-1} = (0, 0, 0, \cdots, d, 0),$$
$$e_L = (0, 0, 0, \cdots, 0, d),$$

which are manifestly linearly independent with the determinant $d^{L-1}$. Integral linear combinations of these vectors define the lattice in $E_L$ with basis vectors $\{e_1, e_2, \cdots, eL\}$. The aim of spectral tests of L-th degree is to compute the *largest* distance $\lambda_d^{(L)}(z)$ between adjacent parallel lattice hyperplanes of L-1 dimension that passes through L linearly independent lattice vectors, and compute the ratio $\rho_d^{(L)}(z) := \lambda_d^{(L)}(z) / \overline{\phantom{1}} 1-, \lambda_d^{(L)} > 1$ as the valuation of the L-th degree spectral test, where $\overline{\phantom{,}}, \lambda_d^{(L)}$ for $L=2,3,\cdots,6$ are the smallest possible values of $\lambda_d^{(L)}(z)$ realized by geometrically ideal forms of lattices. Expressions of $\overline{\phantom{,}}, \lambda_d^{(L)}$ are tabulated as List 4 in Figure 5.

The most transcendental part of the computation of spectral tests is summarized in the following statement:

(Theorem 8) Define the reciprocal or dual lattice vectors $\{f_1, f_2, \cdots, f_L\}$ corresponding to the basis vectors $\{e_1, e_2, \cdots, e_L\}$ as follows:

$$f_1 = (d, 0, 0, \cdots, 0, 0),$$
$$f_2 = (-z, 1, 0, \cdots, 0, 0),$$
$$f_3 = (-z^2, 0, 1, \cdots, 0, 0),$$
$$\cdots\cdots\cdots\cdots$$
$$f_{L-1} = (-z^{L-2}, 0, 0, \cdots, 1, 0),$$
$$f_L = (-z^{L-1}, 0, 0, \cdots, 0, 1).$$

Vectors formed by integral linear combinations of $\{f_1, f_2, \cdots, f_L\}$ constitute the dual lattice for the generator $(d,z)$. Let $a_{min}^{(L)}(z)$ denote the shortest non-zero vector length in the L-dimensional $(d,z)$ reciprocal lattice. Then the largest distance $\lambda_d^{(L)}(z)$ between adjacent parallel hyperplanes of the original lattice is expressed by the formula $\lambda_d^{(L)}(z) = d/a_{min}^{(L)}(z)$. (End of Theorem 8)

The complete proof of Theorem 8 is given in Nakazawa and Nakazawa (2012c). The full proof needs a too large amount of papers to be given here. We therefore omit the description, refer readers to the original report, and describe here procedures of the simplest 2nd test needed in giving Claim 1. The reciprocal basis vectors with degree L=2 for the generator $(d,z)$ are

$$f_1=(d,0), \qquad f_2=(-z,1).$$

A general perspective, useful also in higher dimensions L=3,4,⋯, is obtained by considering a vector with *cartesian* integer coordinates $f=(j_1,j_2)$ that is in the reciprocal lattice. We have the following:

**(Corollary 9)** The necessary and sufficient condition for the integer vector $f=(j_1,j_2)$ to be in the 2-dimensional reciprocal lattice of the (d,z) generator, is given by the following:

$$j_1+zj_2\equiv 0 \bmod(d).$$

**(Proof)** For the vector $f=(j_1,j_2)$ to be in the noted reciprocal lattice, there necessarily exist integers $m_1,m_2$ and give $f=m_1f_1+m_2f_2$ or

$$j_1=dm_1-zm_2, \qquad j_2=m_2.$$

Therefore, the condition $j_1+zj_2=dm_1\equiv 0 \bmod(d)$ is necessary. Conversely, if this condition is satisfied, there exists an integer k that gives $j_1+zj_2=kd$, or

$$f=(j_1,j_2)=(kd-zj_2,j_2)=kf_1+j_2f_2,$$

and f is a dual lattice vector. The condition is thus sufficient. ■ One of merits of cartesian coordinate representation $f=(j_1,j_2)$ is that the vector length of f is given by the simple Euclidean norm $\|f\|:=\{(j_1)^2+(j_2)^2\}^{1/2}$. Furthermore, the restriction noted in List 4 of Figure 5,

$$\lambda_d^{(2)}(z)> \overline{\phantom{xx}}, \lambda_d^{(2)}=2^{-1/2}3^{1/4}d^{1/2},$$

which holds by geometrical reasons for any pair (d,z) of odd modulus d and the multiplier z coprime to d, or *for any pair of coprime integers d and z*, tells us on the existence a very helpful bound,

$$\lambda_d^{(2)}(z)=d/a_{min}^{(2)}(z)>2^{-1/2}3^{1/4}d^{1/2}, \qquad a_{min}^{(2)}(z)<2^{1/2}3^{-1/4}d^{1/2}$$

for the length $a_{min}^{(2)}(z):=\|f_{min}\|$ of the shortest non-zero vector $f_{min}$ in the reciprocal lattice. Thus, the search of the shortest dual vector $f_{min}=(j_1,j_2)$ with integer cartesian coordinates for (d,z) may be restricted to a narrow range $|j_1|,|j_2|<O(d^{1/2})$. Similar helpful bounds also exist in higher dimensions L≥2 with due modifications of the formula, indicating the computationally tame feature of spectral tests. The 2nd degree spectral test usually judges the generator (d,z) giving $\rho_d^{(2)}(z):=\lambda_d^{(2)}(z)/\overline{\phantom{xx}}, \lambda_d^{(2)}$ satisfies $\rho_d^{(2)}<1.25$ to be passable, as initiated by Fishman and Moore (1986).

Nakazawa and Nakazawa (2012c): N. Nakazawa and H. Nakazawa, *Multiplicative congruential generators with moduluses formed by two odd-prime-factors for uniform and independent random numbers II. Structures associated with spectral tests.* Filename *popesq2.pdf,* uploaded in http://www10.plala.or.jp/h-nkzw/ (October 15, 2012).

Multiplicative congruential generators for uniform and independent random numbers have another influential design that adopts the power of the prime 2 as the modulus $d=2^i$. A simple condition $z\equiv 5 \bmod 8$ ensures the multiplier z to give the largest possible period $T=2^{i-2}=d/4$. In another epoch making work Fishman (1990) executed the spectral tests for the modulus $d=2^{32}$ exhausting all possible multipliers $z\equiv 5$ (8), and also examined a portion of multipliers for $d=2^{48}$; computational difficulties prevented him to perform exhaustive tests in the latter case. Thus, from the start the modulus $d=2^i$ is confronted by computational difficulties. Nakazawa and Nakazawa (2008) showed that the problem cannot be resolved by taking composite moduluses. If the power of 2 enters a modulus d as a factor in product with odd primes or odd-prime-powers, it inevitably introduces correlations among powers of submultipliers, and the resultant random numbers cannot be taken as independent; the flaw is vicious in the sense that it cannot be detected by spectral tests. Stated differently, the modulus $d=2^i$ should be used standing alone for any multiplicative congruential generator, and severe difficulties of computation in exhaustive spectral tests have no way to be alleviated from the status met in Fishman (1990). We note here another problem. Suppose we have a generator (d,z) with $d=2^i$ and $z \equiv 5 \bmod(8)$. We saw that (d,$z^j$) for j=2,3,$\cdots$ should also be good random number generators, and difficulties arise with their orders. Since the generator (d=2',z) has the order $T=2^{i-2}$, the generator (d,$z^j$) has

$$T'=T/GCD(j,T)=T/GCD(j,2^{i-2})$$

as its order. If the exponent j of the multiplier reaches $j=2^m$ for m<i-2, a sudden change T'=T/2$^m$ arises. This feature will be unfit for generators (d=2$^i$z$^j$) with various index j to realize good independence of random numbers. Of course, this is only a guess harbored in mind confronted by very heavy computations of spectral tests, and the actual performance of generators should be discerned by numerical experiments, though.

Fishman (1990): G. S. Fishman, Multiplicative congruential random number generators with modulus 2$\beta$: An exhaustive analysis for $\beta$=32 and a partial analysis for $\beta$=48. Mathematics of Computation, Vol. 54 (1990), pp.331-344. Nakazawa and Nakazawa (2008): H. Nakazawa and N. Nakazawa, Designs of uniform and independent random numbers with long period and high precision-Control of the sequential geometry through products group structures and lattice configurations. Filename 3978erv.pdf, uploaded in http://www10.plala.or.jp/ h-nkzw/ (March 9-July 8, 2008).

**Brief Explanations of Figures**

(Figures 1A, 1B) Typical distributions of points formed by consecutive 2-tuples of random numbers emitted from the multiplicative congruential generator (d,z); depicted distributions correspond to the valuation p:= $\rho_d^{(2)}(z)$ around 1.05, 1.10, $\cdots$; squares drawn are taken slightly larger than unit squares, and (d,z) may be read from figure captions.

(Figure 2) List 1A to List 1E showing performances of top 5 multipliers of Fishman and Moore (1986); the row a) is the value shown in their paper, the row 1/a) shows the inverse of values of a) and agrees with the present $\rho_d^{(L)}(z)$, the row b) is the calculation of $\rho_d^{(L)}(z)$ by the present inventors, and remaining rows show $\rho_d^{(2)}(z^j)$ for j=2,3,$\cdots$,6.

(Figure 3) List 2A and List 2B of generators (d,$z^j$) for j=1,2,$\cdots$ showing the order of $z^j$, existence or not of -1 in the cyclic sequence from (d,$z^j$), and the efficiency $\tau$, where the generator (d,z) is designed according to ways indicated in Claim 2.

(Figure 4) List 3A to List 3C of generators (d,$z^j$) for j=1,2,$\cdots$ showing the order, existence or not of -1 in the cyclic sequence, and the efficiency $\tau$, where the generator (d,z) is designed according to ways indicated in Claim 3.

(Figure 5) List 4 showing the smallest value $\overline{\phantom{xx}}$,$\lambda_d^{(L)}$ of the maximum distance $\lambda_d^{(L)}(z)$ of adjacent parallel lattice hyperplanes of L-1 dimension realized by the geometrically ideal form of the lattice in the L-dimensional Euclidean space, with the volume of the unit cell of the lattice unified to $d^{L-1}$.

**Claims**

**1.** A method for using multiplicative congruential generator (d,z) of uniform and independent random numbers with an odd modulus d and a multiplier z coprime to d, which starts from an arbitrarily given integer n coprime to d and recursively emits a sequence of integers {$r_0$,$r_1$,$r_2$,$\cdots$} by congruence relations

$$r_0 \equiv n \bmod(d), \quad 0 < r_0 < d,$$

$$r_k \equiv z r_{k-1} \bmod(d), \quad 0 < r_k < d, \quad k=1,2,3,\cdots,$$

and gives output random numbers {$v_k$:=$r_{k-1}$/d| k=1,2,$\cdots$}, wherein the multiplier z is selected so as to fulfill the condition that the generator (d,z'), with z'=$z^j \bmod(d)$ for the integer j at least in the range 1$\leq$j$\leq$6, pass the 2nd degree spectral test within the valuation 1.25, namely, for any integer j in the range $1 \leq j \leq 6$ the generator (d,z') with $z' = z^j \bmod(d)$ satisfies the condition that the dual lattice vector f, defined for (d,z') by a linear combination $f := m_1 f_1 + m_2 f_2$ of dual lattice basis vectors $\{f_1, f_2\}$,

$$f_1 := (d, 0), \qquad f_2 := (-z', 1),$$

with integer coefficients $\{m_1, m_2\}$ and with the length

$$\| f \| := \{ (dm_1 - z'm_2)^2 + (m_2)^2 \}^{1/2} > 0,$$

has the shortest non-zero vector $f_{min}$ with its length $a_{min}^{(2)}(z') := \| f_{min} \| > 0$ satisfying

$$\rho_d^{(2)}(z') := 2^{1/2} d^{1/2} / \{ 3^{1/4} a_{min}^{(2)}(z') \} < 1.25.$$

2. A method of generating uniform and independent random numbers, comprising
the step of taking a positive integer d to be called modulus,
the step of taking a positive integer z to be called multiplier coprime with d, the step of taking a positive integer n to be called initial value coprime with d, the step of generating a sequence $\{r_0, r_1, r_2, \cdots\}$ of integers by realizing congruence relations

$$r_0 \equiv n \bmod(d), \qquad 0 < r_0 < d,$$

$$r_k \equiv z r_{k-1} \bmod(d), \qquad 0 < r_k < d, \qquad k = 1, 2, \cdots,$$

and the step of outputting a random number sequence $\{v_1, v_2, \cdots\}$ by realizing the arithmetic

$$v_k = r_{k-1} / d, \qquad k = 1, 2, \cdots,$$

wherein the modulus d and the multiplier z are chosen to realize desirable staggering of periods of their immanent subgenerators by the setting such that

said modulus d has the form of a product $d = \{(p_1)^{\wedge} i_1\} \times \{(p_2)^{\wedge} i_2\}$ of powers of distinct odd primes $p_1, p_2$ with exponents $i_1$ and $i_2$ that may take arbitrary integral values $i_1 \geq 1$ and $i_2 \geq 1$,
said odd prime $p_1$ gives an odd integer $q = (p_1 - 1)/2$ that is also a prime,
said odd prime $p_2$ gives an odd integer $r = (p_2 - 1)/4$ that is also a prime,
said odd primes $p_1, q, p_2, r$ are all distinct,
said multiplier z is determined modulo d with a primitive root $z_1$ modulo $(p_1)^{\wedge} i_1$ and with a primitive root $z_2$ modulo $(p_2)^{\wedge} i_2$ either by congruence relations

$$z \equiv z_1 \bmod \{(p_1)^{\wedge} i_1\}, \qquad z \equiv z_2 \bmod \{(p_2)^{\wedge} i_2\},$$

or by congruence relations

$$z \equiv -z_1 \bmod \{(p_1)^{\wedge}i_1\}, \qquad z \equiv z_2 \bmod \{(p_2)^{\wedge}i_2\}.$$

3. A method of generating uniform and independent random numbers comprising
   the step of taking a positive integer d to be called modulus,
   the step of taking a positive integer z to be called multiplier coprime with d, the step of taking a positive integer n to be called initial value coprime with d, the step of generating a sequence $\{r_0, r_1, r_2, \cdots\}$ of integers by realizing congruence relations

$$r_0 \equiv n \bmod(d), \qquad 0 < r_0 < d,$$

$$r_k \equiv z r_{k-1} \bmod(d), \qquad 0 < r_k < d, \qquad k = 1, 2, \cdots,$$

and the step of outputting a random number sequence $\{v_1, v_2, \cdots\}$ by realizing the arithmetic

$$v_k = r_{k-1}/d, \qquad k = 1, 2, \cdots,$$

wherein the modulus d and the multiplier z are chosen to realize desirable staggering of periods of their immanent subgenerators by the setting such that

said modulus d has the form of a product $d = \{(p_1)^{\wedge}i_1 \times \{(p_2)^{\wedge}i_2\}$ of powers of distinct odd primes $p_1, p_2$ with exponents $i_1$ and $i_2$ that may take arbitrary integral values $i_1 \geq 1$ and $i_2 \geq 1$,
said odd prime $p_1$ gives an odd integer $q_1 = (p_1 - 1)/2$ that is also a prime,
said odd prime $p_2$ gives an odd integer $q_2 = (p_2 - 1)/2$ that is also a prime,
said odd primes $p_1$, $q_1$, $p_2$, $q_2$ are all distinct,
said multiplier z is determined modulo d with a primitive root $z_1$ modulo $(p_1)^{\wedge}i_1$ and with a primitive root $z_2$ modulo $(p_2)^{\wedge}i_2$ either by congruence relations

$$z \equiv z_1 \bmod \{(p_1)^{\wedge}i_1\}, \qquad z \equiv z_2 \bmod \{(p_2)^{\wedge}i_2\},$$

or by congruence relations

$$z \equiv -z_1 \bmod \{(p_1)^{\wedge}i_1\}, \qquad z \equiv z_2 \bmod \{(p_2)^{\wedge}i_2\},$$

or by congruence relations

$$z \equiv z_1 \bmod \{(p_1)^{\wedge}(i_1)\}, \qquad z \equiv -z_2 \bmod \{(p_2)^{\wedge}i_2\},$$

or by congruence relations

$$z \equiv -z_1 \bmod \{(p_1)^{\wedge}i_1\}, \qquad z \equiv -z_2 \bmod \{(p_2)^{\wedge}i_2\}.$$

**Figure 1A**  Geometry of 2-tuples of random numbers and spectral test valuation $\rho = \rho_d^{(2)}(z)$

$\rho = 1.0503 \quad (257, 27)$

$\rho = 1.0983 \quad (283, 83)$

$\rho = 1.1459 \quad (317, 245)$

$\rho = 1.1982 \quad (281, 266)$

$\rho = 1.2491 \quad (277, 20)$

$\rho = 1.3012 \quad (283, 113)$

**Figure 1B** Geometry of 2-tuples of random numbers and spectral test valuation $\rho = \rho_d^{(2)}(z)$

$\rho = 1.3501 \quad (311, 297)$

$\rho = 1.3947 \quad (251, 76)$

$\rho = 1.4547 \quad (251, 46)$

$\rho = 1.4959 \quad (281, 117)$

$\rho = 1.9915 \quad (419, 381)$

$\rho = 2.7283 \quad (419, 262)$

**Figure 2**  Top 5 passers reported by Fishman and Moore (1986)

List 1A  $z = 742938285$

|        | 2nd          | 3rd          | 4th          | 5th          | 6th          |
|--------|--------------|--------------|--------------|--------------|--------------|
| $a)$   | 0.8673       | 0.8607       | 0.8627       | 0.8320       | 0.8342       |
| $1/a)$ | 1.1530       | 1.1618       | 1.1592       | 1.2019       | 1.1988       |
| $b)$   | 1.15306751   | 1.16186656   | 1.15915450   | 1.20199716   | 1.9882541    |
|        | 2nd of $z^2$ | 2nd of $z^3$ | 2nd of $z^4$ | 2nd of $z^5$ | 2nd of $z^6$ |
| $c)$   | 1.191805599  | 1.18316446   | 1.32378868   | 3.25782855   | 1.04479227   |

List 1B  $z = 950706376$

|        | 2nd          | 3rd          | 4th          | 5th          | 6th          |
|--------|--------------|--------------|--------------|--------------|--------------|
| $a)$   | 0.8574       | 0.8985       | 0.8692       | 0.8677       | 0.8274       |
| $1/a)$ | 1.1663       | 1.1130       | 1.1505       | 1.1995       | 1.2086       |
| $b)$   | 1.16627569   | 1.11291561   | 1.15054146   | 1.19946130   | 1.20856552   |
|        | 2nd of $z^2$ | 2nd of $z^3$ | 2nd of $z^4$ | 2nd of $z^5$ | 2nd of $z^6$ |
| $c)$   | 1.19708825   | 6.76681886   | 1.46420589   | 5.00940631   | 2.26066864   |

List 1C  $z = 1226874159$

|        | 2nd          | 3rd          | 4th          | 5th          | 6th          |
|--------|--------------|--------------|--------------|--------------|--------------|
| $a)$   | 0.8411       | 0.8787       | 0.8255       | 0.8378       | 0.8441       |
| $1/a)$ | 1.1889       | 1.1380       | 1.2114       | 1.1936       | 1.1847       |
| $b)$   | 1.18893209   | 1.13803984   | 1.21140770   | 1.19360615   | 1.18426026   |
|        | 2nd of $z^2$ | 2nd of $z^3$ | 2nd of $z^4$ | 2nd of $z^5$ | 2nd of $z^6$ |
| $c)$   | 3.51885751   | 2.19846315   | 1.53688543   | 1.47158421   | 1.48916585   |

List 1D  $z = 62089911$

|        | 2nd          | 3rd          | 4th          | 5th          | 6th          |
|--------|--------------|--------------|--------------|--------------|--------------|
| $a)$   | 0.8930       | 0.8903       | 0.8575       | 0.8630       | 0.8249       |
| $1/a)$ | 1.1198       | 1.1232       | 1.1662       | 1.1587       | 1.2123       |
| $b)$   | 1.11986188   | 1.12320242   | 1.16605693   | 1.115876257  | 1.21227975   |
|        | 2nd of $z^2$ | 2nd of $z^3$ | 2nd of $z^4$ | 2nd of $z^5$ | 2nd of $z^6$ |
| $c)$   | 1.17907297   | 1.44118579   | 1.20332225   | 1.17058675   | 1.63022644   |

List 1E  $z = 1343714483$

|        | 2nd          | 3rd          | 4th          | 5th          | 6th          |
|--------|--------------|--------------|--------------|--------------|--------------|
| $a)$   | 0.8237       | 0.8324       | 0.8245       | 0.8262       | 0.8255       |
| $1/a)$ | 1.2140       | 1.2013       | 1.2129       | 1.2104       | 1.2114       |
| $b)$   | 1.21411121   | 1.20130010   | 1.21290241   | 1.21035116   | 1.21145141   |
|        | 2nd of $z^2$ | 2nd of $z^3$ | 2nd of $z^4$ | 2nd of $z^5$ | 2nd of $z^6$ |
| $c)$   | 1.99192650   | 1.45479150   | 1.13241226   | 1.56904111   | 1.04455900   |

**Figure 3** The usable period and the efficiency $\tau :=$ (usable period)$/d$
of the generator $(d, z^j)$ of Claim 2: $d = d_1 d_2$, $d_1 = p_1{}^\wedge i_1$, $d_2 = p_2{}^\wedge i_2$
$p_1 = 2q + 1$ $p_2 = 4r + 1$, $p_1, q, p_2, r$ are distinct odd primes, $d \approx 8qrd_1 d_2/(p_1 p_2)$.

List 2A $z_1$ is a primitive root of $d_1$ with the order $2qd_1/p_1$,
$z_2$ is a primitive root of $d_2$ with the order $4rd_2/p_2$.

| $z^j$ | The LCM order of $z' := z^j$ modulo $d$ | Is the cyclic sequence of $z'$ inclusive of $-1$? | Approximate $\tau$ |
|---|---|---|---|
| $z$ | $4qrd_1 d_2/(p_1 p_2)$ | no | $1/2$ |
| $z^2$ | $2qrd_1 d_2/(p_1 p_2)$ | no | $1/4$ |
| $z^3$ | $4qrd_1 d_2/(p_1 p_2)$ | no | $1/2$ |
| $z^4$ | $qrd_1 d_2/(p_1 p_2)$ | no | $1/8$ |
| $z^5$ | $4qrd_1 d_2/(p_1 p_2)$ | no | $1/2$ |
| $z^6$ | $2qrd_1 d_2/(p_1 p_2)$ | no | $1/4$ |
| $z^7$ | $4qrd_1 d_2/(p_1 p_2)$ | no | $1/2$ |
| $z^8$ | $qrd_1 d_2/(p_1 p_2)$ | no | $1/8$ |

List 2B $z_1$ is the negative of a primitive root of $d_1$ with the order $qd_1/p_1$,
$z_2$ is a primitive root of $d_2$ with the order $4rd_2/p_2$.

| $z^j$ | The LCM order of $z' := z^j$ modulo $d$ | Is the cyclic sequence of $z'$ inclusive of $-1$? | Approximate $\tau$ |
|---|---|---|---|
| $z$ | $4qrd_1 d_2/(p_1 p_2)$ | no | $1/2$ |
| $z^2$ | $2qrd_1 d_2/(p_1 p_2)$ | no | $1/4$ |
| $z^3$ | $4qrd_1 d_2/(p_1 p_2)$ | no | $1/2$ |
| $z^4$ | $qrd_1 d_2/(p_1 p_2)$ | no | $1/8$ |
| $z^5$ | $4qrd_1 d_2/(p_1 p_2)$ | no | $1/2$ |
| $z^6$ | $2qrd_1 d_2/(p_1 p_2)$ | no | $1/4$ |
| $z^7$ | $4qrd_1 d_2/(p_1 p_2)$ | no | $1/2$ |
| $z^8$ | $qrd_1 d_2/(p_1 p_2)$ | no | $1/8$ |

**Figure 4** The usable period and the efficiency $\tau := $ (usable period)$/d$ of the generator $(d, z^j)$ of Claim 3: $d = d_1 d_2$, $d_1 = p_1{}^\wedge i_1$, $d_2 = p_2{}^\wedge i_2$, $p_1 = 2q_1 + 1$, $p_2 = 2q_2 + 1$, $p_1, q_1, p_2, q_2$ are distinct odd primes, $d \approx 4q_1 q_2 d_1 d_2/(p_1 p_2)$.

List 3A   $z_k$ is a primitive root of $d_k$ with the order $2q_k d_k/p_k$, $k = 1, 2$.

| $z^j$ | The LCM order of $z' := z^j$ modulo $d$ | Is the cyclic sequence of $z'$ inclusive of $-1$? | Approximate $\tau$ |
|---|---|---|---|
| $z$ | $2q_1 q_2 d_1 d_2/(p_1 p_2)$ | yes | $1/4$ |
| $z^2$ | $q_1 q_2 d_1 d_2/(p_1 p_2)$ | no | $1/4$ |
| $z^3$ | $2q_1 q_2 d_1 d_2/(p_1 p_2)$ | yes | $1/4$ |
| $z^4$ | $q_1 q_2 d_1 d_2/(p_1 p_2)$ | no | $1/4$ |
| $z^5$ | $2q_1 q_2 d_1 d_2/(p_1 p_2)$ | yes | $1/4$ |
| $z^6$ | $q_1 q_2 d_1 d_2/(p_1 p_2)$ | no | $1/4$ |
| $z^7$ | $2q_1 q_2 d_1 d_2/(p_1 p_2)$ | yes | $1/4$ |
| $z^8$ | $q_1 q_2 d_1 d_2/(p_1 p_2)$ | no | $1/4$ |

List 3B   A primitive root and the negative of other primitive root.

| $z^j$ | The LCM order of $z' := z^j$ modulo $d$ | Is the cyclic sequence of $z'$ inclusive of $-1$? | Approximate $\tau$ |
|---|---|---|---|
| $z$ | $2q_1 q_2 d_1 d_2/(p_1 p_2)$ | no | $1/2$ |
| $z^2$ | $q_1 q_2 d_1 d_2/(p_1 p_2)$ | no | $1/4$ |
| $z^3$ | $2q_1 q_2 d_1 d_2/(p_1 p_2)$ | no | $1/2$ |
| $z^4$ | $q_1 q_2 d_1 d_2/(p_1 p_2)$ | no | $1/4$ |
| $z^5$ | $2q_1 q_2 d_1 d_2/(p_1 p_2)$ | no | $1/2$ |
| $z^6$ | $q_1 q_2 d_1 d_2/(p_1 p_2)$ | no | $1/4$ |
| $z^7$ | $2q_1 q_2 d_1 d_2/(p_1 p_2)$ | no | $1/2$ |
| $z^8$ | $q_1 q_2 d_1 d_2/(p_1 p_2)$ | no | $1/4$ |

List 3C   Both of $z_1, z_2$ are the negative of primitive roots.

| $z^j$ | The LCM order of $z' := z^j$ modulo $d$ | Is the cyclic sequence of $z'$ inclusive of $-1$? | Approximate $\tau$ |
|---|---|---|---|
| $z$ | $q_1 q_2 d_1 d_2/(p_1 p_2)$ | no | $1/4$ |
| $z^2$ | $q_1 q_2 d_1 d_2/(p_1 p_2)$ | no | $1/4$ |
| $z^3$ | $q_1 q_2 d_1 d_2/(p_1 p_2)$ | no | $1/4$ |
| $z^4$ | $q_1 q_2 d_1 d_2/(p_1 p_2)$ | no | $1/4$ |
| $z^5$ | $q_1 q_2 d_1 d_2/(p_1 p_2)$ | no | $1/4$ |
| $z^6$ | $q_1 q_2 d_1 d_2/(p_1 p_2)$ | no | $1/4$ |
| $z^7$ | $q_1 q_2 d_1 d_2/(p_1 p_2)$ | no | $1/4$ |
| $z^8$ | $q_1 q_2 d_1 d_2/(p_1 p_2)$ | no | $1/4$ |

**Figure 5**

List 4. Table of the smallest value $\overline{\lambda}_d^{(L)}$, of geometrically ideal lattices with

the unit-cell-volume $d^{L-1}$ in the $L$-dimensional Euclidean space,

for the largest spacing between neghboring $L-1$ dimensional lattice hyperplanes.

| $L$ | 2 | 3 | 4 | 5 | 6 |
|---|---|---|---|---|---|
| $\overline{\lambda}_d^{(L)}$ | $2^{-1/2}3^{1/4}d^{1/2}$ | $2^{-1/6}d^{2/3}$ | $2^{-1/4}d^{3/4}$ | $2^{-3/10}d^{4/5}$ | $2^{-1/2}3^{1/12}d^{5/6}$ |

Europäisches
Patentamt

European
Patent Office

Office européen
des brevets

**EUROPEAN SEARCH REPORT**

Application Number

EP 13 19 7315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/030829 A1 (NAKAZAWA HIROSHI [JP] ET AL) 4 February 2010 (2010-02-04) * paragraph [0001] - paragraph [0005] * * paragraph [0033] - paragraph [0041] * ----- | 1 | INV. G06F7/58 |
| X,D | CN 103 135 961 A (ZHONG ZEHONG; NAKAZAWA NAOYA) 5 June 2013 (2013-06-05) * abstract; claims * * paragraph [0001] * ----- | 2,3 | |
| X | US 2012/290632 A1 (NAKAZAWA HIROSHI [JP] ET AL) 15 November 2012 (2012-11-15) * the whole document * ----- | 2,3 | |
| A | Donald Knuth: "3.3.4. The Spectral Test" In: "The Art of Computer Programming, 2nd edition", 1981, Addison Wesley Publishing Company, Philippines, XP055136537, ISBN: 978-0-20-103822-4 pages 89-113, * the whole document * ----- | 1-3 | |
| A,D | Naoya Nakazawa ET AL: "Multiplicative Congruential Generators with Moduluses Formed by Two Odd-Prime-Factors for Uniform and Independent Random Numbers II. Structures Associated with Spectral Tests", , 15 October 2012 (2012-10-15), pages 1-15, XP055136555, Retrieved from the Internet: URL:http://www10.plala.or.jp/h-nkzw/popesq 2.pdf [retrieved on 2014-08-26] * the whole document * ----- -/-- | 1 | TECHNICAL FIELDS SEARCHED (IPC) G06F |

The present search report has been drawn up for all claims

| Place of search | Date of completion of the search | Examiner |
|---|---|---|
| The Hague | 27 August 2014 | Verhoof, Paul |

EPO FORM 1503 03.82 (P04C01)

| Europäisches Patentamt European Patent Office Office européen des brevets | **EUROPEAN SEARCH REPORT** | Application Number EP 13 19 7315 |
| --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | SMITH C S: "Multiplicative pseudo-random number generators with prime modulus", JOURNAL OF THE ASSOCIATION FOR COMPUTING MACHINERY, ACM, NEW YORK, NY, US, vol. 18, no. 4, October 1971 (1971-10), pages 586-593, XP009105894, ISSN: 0004-5411, DOI: 10.1145/321662.321673 * the whole document * | 1 | |
| A,D | Naoya Nakazawa ET AL: "Multiplicative Congruential Generators with Moduluses Formed by Two Odd-Prime-Factors for Uniform and Independent Random Numbers I. Computational Analysis of Structures", , 31 October 2012 (2012-10-31), pages 1-15, XP055136225, Retrieved from the Internet: URL:http://www10.plala.or.jp/h-nkzw/revpopesq1.pdf [retrieved on 2014-08-25] * the whole document * | 1-3 | |
| A,D | G S FISHMAN ET AL.: "An Exhaustive Analysis of Multiplicative Congruential Random Number Generators with Modulus $2^{31}$ - 1", SIAM JOURNAL ON SCIENTIFIC AND STATISTICAL COMPUTING, PHILADELPHIA, PA, US, vol. 7, no. 1, January 1986 (1986-01), pages 24-45, XP008171472, ISSN: 0196-5204, DOI: 10.1137/0907002 * the whole document * | 1 | TECHNICAL FIELDS SEARCHED (IPC) |

The present search report has been drawn up for all claims

| Place of search | Date of completion of the search | Examiner |
| --- | --- | --- |
| The Hague | 27 August 2014 | Verhoof, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 13 19 7315

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2014

| Patent document cited in search report | Publication date | Patent family member(s) | Publication date |
|---|---|---|---|
| US 2010030829 A1 | 04-02-2010 | JP 4669979 B2 <br> JP 2010040021 A <br> US 2010030829 A1 | 13-04-2011 <br> 18-02-2010 <br> 04-02-2010 |
| CN 103135961 A | 05-06-2013 | NONE | |
| US 2012290632 A1 | 15-11-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 1031356961 A

### Non-patent literature cited in the description

- **G. S. FISHMAN ; L. R. MOORE.** An exhaustive analysis of multiplicative congruential random number generators with modulus 231-1. *SIAM Journal on Scientific and Statistical Computing,* 1986, vol. 7, 24-45
- **NAKAZAWA ; NAKAZAWA.** *Computational progress in spectral tests of multiplicative congruential generators for uniform and independent random numbers realized by moduluses formed with two odd primes,* 26 October 2012, http://www10.plala.or.jp/h-nkzw
- **NAKAZAWA ; NAKAZAWA.** Multiplicative congruential generators with moduluses formed by two odd-prime-factors for uniform and independent random numbers I. *Computational analysis of structures,* 31 October 2012, http://www10.plala.or.jp/h-nkzw
- **G. S. FISHMAN.** Multiplicative congruential random number generators with modulus 2β: An exhaustive analysis for β=32 and a partial analysis for β=48. *Mathematics of Computation,* 1990, vol. 54, 331-344
- **H. NAKAZAWA ; N. NAKAZAWA.** Designs of uniform and independent random numbers with long period and high precision-Control of the sequential geometry through products group structures and lattice configurations. *Filename 3978erv.pdf,* 09 March 2008, www10.plala.or.jp/ h-nkzw